# EUROPEAN PATENT SPECIFICATION

(11) **EP 4 067 429 B1**
(45) Date of publication and mention of the grant of the patent: **22.11.2023**
(21) Application number: 20892228.6
(22) Date of filing: 28.09.2020
(51) Int. Cl.: C08L 15/00, B60C 1/00, C08C 19/22, C08C 19/25, C08K 3/36, C08C 19/44, C08F 236/10, C07F 7/18

(54) **RUBBER COMPOSITION AND TIRE**
KAUTSCHUKZUSAMMENSETZUNG UND REIFEN
COMPOSITION DE CAOUTCHOUC ET PNEU

(30) Priority: 29.11.2019 JP 2019217372
(43) Date of publication of application: 05.10.2022
(73) Proprietor: BRIDGESTONE CORPORATION, Chuo-ku Tokyo 104-8340 (JP)
(72) Inventor: SONE, Ryota, Tokyo 104-8340 (JP); SEO, Kyung Chang, Deajeon, 305738 (KR); KIM, No Ma, Deajeon, 305738 (KR); LEE, Ro Mi, Deajeon, 305738 (KR); KIM, Jin Young, Deajeon, 305738 (KR)
(74) Representative: Marks & Clerk LLP
(86) International application number: PCT/JP2020/036732
(87) International publication number: WO 2021/106351

(56) References cited:
- EP-A1- 3 536 720
- WO-A1-2008/050851
- WO-A1-2009/113546
- WO-A1-2010/030015
- WO-A1-2019/216645
- JP-A- 2008 214 608
- JP-A- 2018 534 401
- JP-A- 2019 501 256
- JP-A- 2019 515 073
- JP-B2- 4 478 262
- US-A1- 2019 233 547

## Description

### TECHNICAL FIELD

This disclosure relates to a rubber composition and a tire.

### BACKGROUND

In recent years, the demand for fuel efficiency of automobiles is increasing because of the movement of global carbon dioxide emission regulations caused by the social demand for energy saving and the growing interest in environmental problems. To meet such demand for fuel efficiency, it has been required to reduce the rolling resistance in terms of tire performance. A method of optimizing a tire structure has been studied as a method for reducing the rolling resistance of a tire, but a general method for reducing rolling resistance is to use a material with low heat generating properties as a rubber composition.

Examples of techniques of improving the low heat generating properties of a rubber composition include the one described in JP4478262B (PTL 1), where a rubber composition uses a modified conjugated diene-based polymer as a rubber component, and the modified conjugated diene-based polymer is obtained by reacting a specific imino group-containing hydrocarbyloxysilane compound.

Because the dispersibility of filler is improved in the rubber composition of PTL 1, a certain rolling resistance-reducing effect can be obtained when the rubber composition is applied to a tire. However, the improvement effect of the rubber composition of PTL 1 is insufficient to meet the recent demand for fuel efficiency, and it is desired to further improve the low heat generating properties. EP 3 536 720 A1 discloses a rubber composition showing improved viscoelasticity properties, which comprises a rubber component and a filler, wherein the rubber component contains a conjugated diene-based polymer modified with an amino alkoxysilane.

To improve the low heat generating properties of a rubber composition, it is conceivable to reduce the content of filler such as carbon black. However, this may deteriorate the performance of rubber such as processability, reinforcing properties, wear resistance, and steering stability when applied to a tire. Therefore, it is desired to develop a technique capable of greatly improving the low heat generating properties without deteriorating performance other than the low heat generating properties.

### CITATION LIST

### Patent Literature

PTL 1: JP4478262B

### SUMMARY

### (Technical Problem)

It could thus be helpful to provide a rubber composition having excellent low heat generating properties without deteriorating other performance, and a tire having greatly improved rolling resistance.

### (Solution to Problem)

As a result of studies to solve the above problems, we found that, by using a conjugated diene-based polymer modified with a specific modifier having oligosiloxane and a tertiary amino group as a rubber component, excellent low heat generating properties can be obtained without deteriorating other performance. Further, we found that, by containing the above-mentioned modified rubber in the rubber component, the dispersibility of a filler such as silica can be enhanced, so that the reinforcing properties and the steering stability when applied to a tire can be further improved.

We thus provide the following.

The rubber composition of the present disclosure is a rubber composition containing a rubber component and a filler, wherein
the rubber component contains a conjugated diene-based polymer modified with a modifier containing a compound represented by the formula 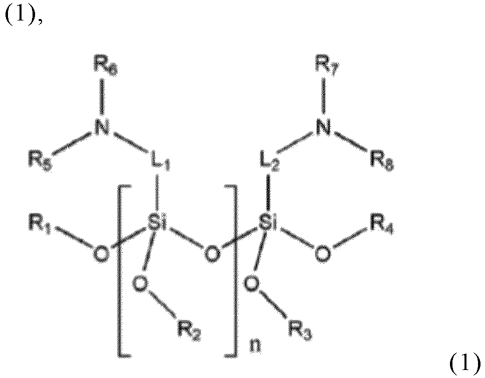 where R1 to R8 are each an independent alkyl group having 1 to 20 carbon atoms; L1 and L2 are each an independent alkylene group having 1 to 20 carbon atoms; and n is an integer of 2 to 4.

With this configuration, excellent low heat generating properties can be realized without deteriorating other performance.

For the rubber composition of the present disclosure, the conjugated diene-based polymer of the modified conjugated diene-based polymer is preferably styrene butadiene rubber. This can realize excellent low heat generating properties more reliably without deteriorating other performance.

For the rubber composition of the present disclosure, the amount of styrene in the modified styrene butadiene rubber is more preferably 10 mass% to 45 mass%. This can further improve the wet performance.

For the rubber composition of the present disclosure, the modifier is preferably any one of the formulas (1a) to (1e).

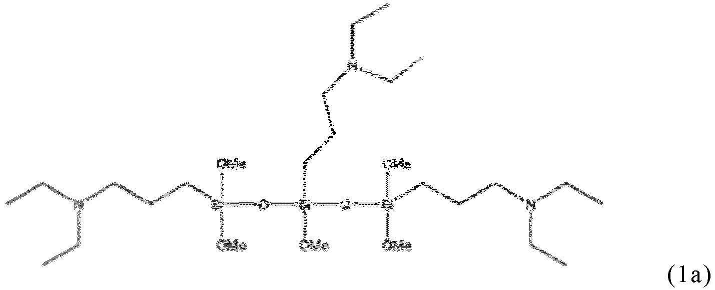

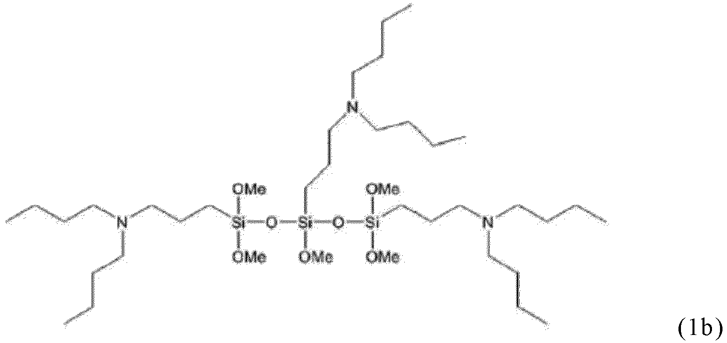

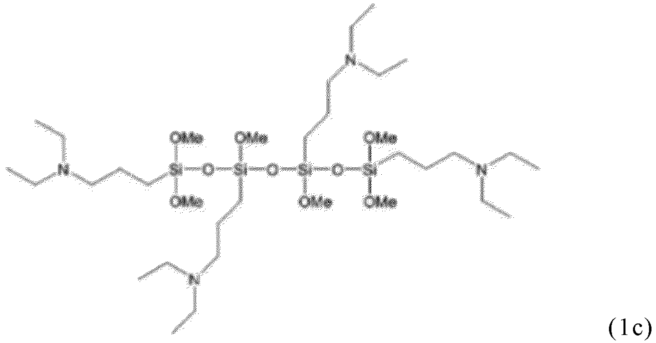

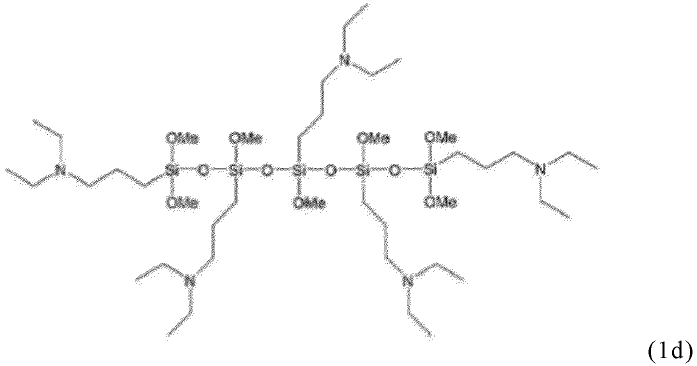

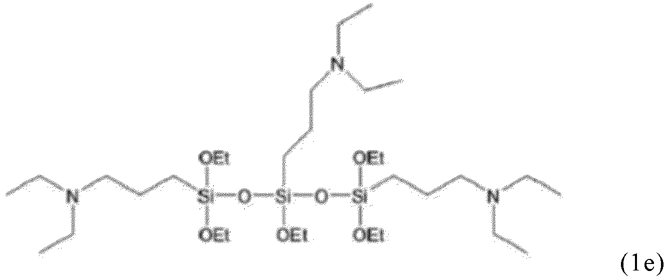

This can realize better low heat generating properties.

For the rubber composition of the present disclosure, the filler preferably contains at least silica. This can further improve the low heat generating properties, wear resistance and wet performance.

The tire of the present disclosure uses the rubber composition of the present disclosure described above.

With this configuration, excellent low heat generating properties can be realized without deteriorating other performance.

### (Advantageous Effect)

According to the present disclosure, it is possible to provide a rubber composition that can realize excellent low heat generating properties without deteriorating other performance. Further, according to the present disclosure, it is possible to provide a tire with greatly improved rolling resistance.

### DETAILED DESCRIPTION

The following describes an embodiment of the present disclosure in detail.

### <Rubber composition>

The rubber composition of the present disclosure is a rubber composition containing a rubber component and a filler.

The following describes each component of the rubber composition of the present disclosure.

### (Rubber component)

The rubber composition of the present disclosure contains a rubber component.

It is required that the rubber component contain a conjugated diene-based polymer modified with a modifier containing a compound represented by the formula (1) (hereinafter, it may be referred to as "modified conjugated diene-based polymer").

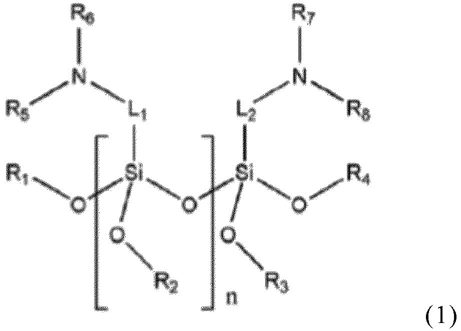

By using a conjugated diene-based polymer that has been modified with a modifier containing a compound represented by the formula (1) containing oligosiloxane, which is a filler-affinity functional group, and a tertiary amino group as the rubber component, the dispersibility of a filler such as silica can be enhanced. As a result, the low heat generating properties are greatly improved and the dispersibility of the filler is improved in the rubber composition of the present disclosure, and other physical properties such as the reinforcing properties, the steering stability when applied to a tire, and the processability are not deteriorated.

In the formula (1), R1 to R8 are each an independent alkyl group having 1 to 20 carbon atoms; L₁ and L₂ are each an independent alkylene group having 1 to 20 carbon atoms; and n is an integer of 2 to 4.

Specifically, in the formula (1), R1 to R4 may each independently be a substituted or unsubstituted alkyl group having 1 to 20 carbon atoms. When the R1 to R4 are substituted, they may each independently be substituted with at least one substituent selected from the group consisting of an alkyl group having 1 to 10 carbon atoms, a cycloalkyl group having 3 to 10 carbon atoms, an alkoxy group having 1 to 10 carbon atoms, a cycloalkoxy group having 4 to 10 carbon atoms, an aryl group having 6 to 12 carbon atoms, an aryloxy group having 6 to 12 carbon atoms, an alkanoyloxy group having 2 to 12 carbon atoms (alkanoyl, RaCOO⁻, where Ra is an alkyl group having 1 to 9 carbon atoms), an aralkyloxy group having 7 to 13 carbon atoms, an arylalkyl group having 7 to 13 carbon atoms, and an alkylaryl group having 7 to 13 carbon atoms.

More specifically, the R1 to R4 may be a substituted or unsubstituted alkyl group having 1 to 10 carbon atoms. More specifically, the R1 to R4 may each independently be a substituted or unsubstituted alkyl group having 1 to 6 carbon atoms.

In the formula (1), R5 to R8 are each independently a substituted or unsubstituted alkyl group having 1 to 20 carbon atoms. Specifically, they may each independently be a substituted or unsubstituted alkyl group having 1 to 10 carbon atoms. More specifically, they may each independently be a substituted or unsubstituted alkyl group having 1 to 6 carbon atoms. When substituted, they can be substituted with a substituent as described above for R1 to R4. When R5 to R8 are not an alkyl group but a hydrolyzable substituent, the bonds of N-R5R6 and N-R7R8 may be hydrolyzed to N-H in the presence of water, which may adversely affect the processability of the polymer.

More specifically, in the compound represented by the formula (1), R1 to R4 may be a methyl group or an ethyl group, and R5 to R8 may be an alkyl group having 1 to 10 carbon atoms.

In the present disclosure, the amino group in the compound represented by the formula (1), that is, N-R5R6 and N-R7R8 are preferably a tertiary amino group. The tertiary amino group provides better processability when the compound represented by the formula (1) is used as a modifier.

Note that when a protecting group for protecting an amino group is bonded to the R5 to R8, or hydrogen is bonded to the R5 to R8, it may be difficult to obtain the effect of the compound represented by the formula (1). When hydrogen is bonded, anions react with the hydrogen during the modification and lose their reactivity, rendering the modification reaction itself impossible. When a protecting group is bonded, the modification reaction will proceed, but it is deprotected by hydrolysis during subsequent processing in a state of being bonded to the polymer terminal, resulting in a primary or secondary amino group. The deprotected primary or secondary amino group may cause a high viscosity in the product during subsequent composition and may cause a decrease in processability.

In the compound represented by the formula (1), L₁ and L₂ are each independently a substituted or unsubstituted alkylene group having 1 to 20 carbon atoms.

More specifically, L₁ and L₂ are each independently an alkylene group having 1 to 10 carbon atoms. More specifically, they may be an alkylene group having 1 to 6 carbon atoms such as a methylene group, an ethylene group, or a propylene group.

For L₁ and L₂ in the compound represented by the formula (1), the effect improves as the distance between the Si atom and the N atom in the molecule decreases. However, if Si is directly bonded to N, the bond between Si and N may be broken during subsequent processing, and a secondary amino group formed in this case is likely to be washed away by water during subsequent processing. Then, it is difficult to bond a modified conjugated diene-based polymer thus obtained to a silica filler through a member of the amino group that promotes the bond with a silica filler, which may deteriorate the dispersion effect of a dispersant. Considering the improvement effect by the length of the bond between Si and N, the L₁ and L₂ are more preferably each independently an alkylene group having 1 to 3 carbon atoms such as a methylene group, an ethylene group, or a propylene group, and more specifically, they may be a propylene group. Further, L₁ and L₂ may be substituted with a substituent as described above for R1 to R4.

The compound represented by the formula (1) is preferably, for example, any one of the compounds represented by the following formulas (1a) to (1e). This can realize better low heat generating properties.

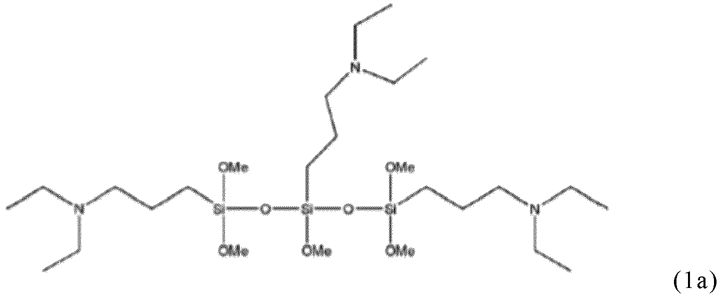

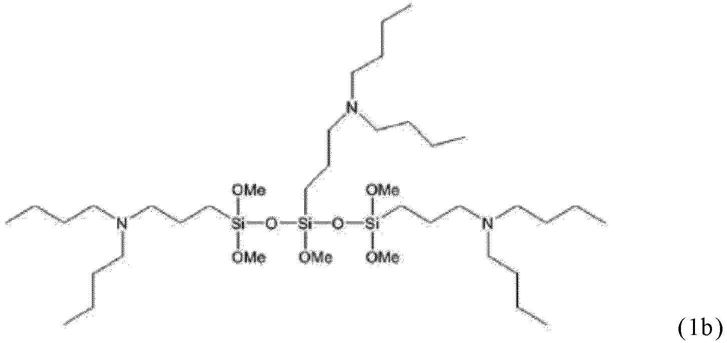

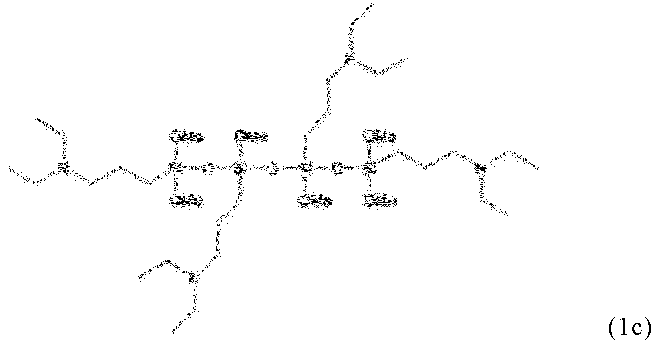

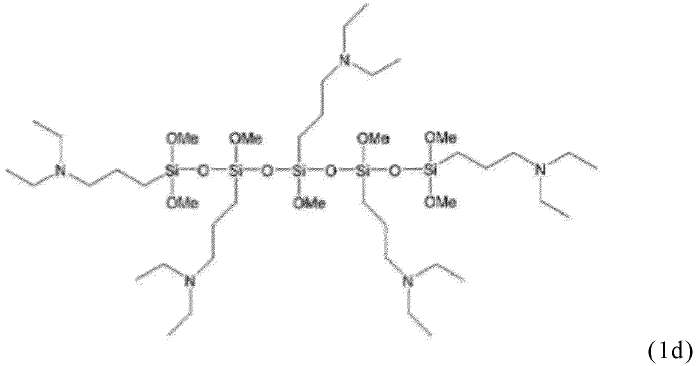

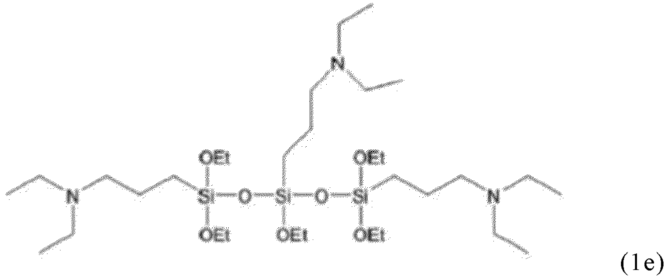

In the compound represented by the formula (1) of the modifier of the present disclosure, an alkoxysilane structure is bonded to an activated terminal of the conjugated diene-based polymer, and a Si-O-Si structure and three or more amino groups bonded to a terminal exhibit affinity for a filler such as silica. In this way, the bond between the filler and the modified conjugated diene-based polymer can be promoted as compared with a conventional modifier containing one amino group in the molecule. Further, the degree of bonding of the activated terminal of the conjugated diene-based polymer is uniform, and it is found that, when observing the change in molecular weight distribution before and after coupling, the molecular weight distribution after coupling does not increase as compared to before coupling and is kept constant. Therefore, the physical properties of the modified conjugated diene-based polymer itself are not deteriorated, the aggregation of the filler in the rubber composition can be prevented, and the dispersibility of the filler can be improved. As a result, the processability of the rubber composition can be improved. These effects can particularly improve the fuel efficiency properties, wear properties and braking properties in a well-balanced manner when the rubber composition is applied to a tire.

Note that the compound represented by the formula (1) can be obtained through a condensation reaction represented by the following reaction formula 1.

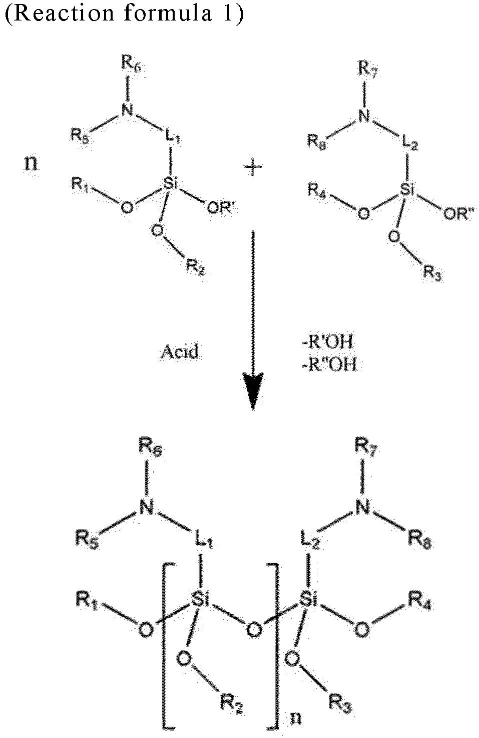

In the reaction formula 1, R1 to R8, L1 and L2, and n are the same as those defined in the formula (1) above, and R' and R" are arbitrary substituents that do not affect the condensation reaction. For example, the R' and R" may each independently be the same as any one of R1 to R4.

The reaction of the reaction formula 1 is carried out under acid conditions, and the acid is not limited if it is a common one for a condensation reaction. A person skill in the art can select an optimum acid according to all kinds of process variables such as the type of reactor in which the reaction is carried out, the starting material, and the reaction temperature.

The conjugated diene-based polymer of the conjugated diene-based polymer modified with a modifier containing a compound represented by the formula (1) is not particularly limited, and examples thereof include a homopolymer of a conjugated diene-based monomer, and a copolymer of a conjugated diene-based monomer and an aromatic vinyl-based monomer.

When the modified conjugated diene-based polymer is a copolymer, it may be a random copolymer in which structural units forming the copolymer are randomly arranged and bonded, including structural units derived from a conjugated diene-based monomer and structural units derived from an aromatic vinyl-based monomer.

For example, the modified conjugated diene-based polymer may have a narrow molecular weight distribution Mw/Mn (also referred to as polydispersity index (PDI)) of 1.1 to 3.0. When the molecular weight distribution of the modified conjugated diene-based polymer exceeds 3.0 or is less than 1.1, the tensile properties and the viscoelasticity may deteriorate when applied to the rubber composition. Considering the remarkable effect of improving the tensile properties and the viscoelasticity of the polymer by controlling the molecular weight distribution of the modified conjugated diene-based polymer, the molecular weight distribution of the modified conjugated diene-based polymer is preferably 1.3 to 2.0. Note that the modified conjugated diene-based polymer has a similar molecular weight distribution to that of the conjugated diene-based polymer before being modified with the modifier.

The molecular weight distribution of the modified conjugated diene-based polymer can be calculated from a ratio (Mw/Mn) of the weight average molecular weight (Mw) to the number average molecular weight (Mn). The number average molecular weight (Mn) is a common average of individual polymer molecular weights obtained by measuring the molecular weights of n polymer molecules and dividing the total of these molecular weights by n, and the weight average molecular weight (Mw) represents a molecular weight distribution of the polymer composition. The average of total molecular weight can be expressed in grams per mole (g/mol).

In the present disclosure, the weight average molecular weight and the number average molecular weight each are a polystyrene-equivalent molecular weight analyzed by gel permeation chromatography (GPC).

The modified conjugated diene-based polymer satisfies the above-mentioned molecular weight distribution conditions and has a number average molecular weight (Mn) of 50,000 g/mol to 2,000,000 g/mol, where the number average molecular weight may be, more specifically, 200,000 g/mol to 800,000 g/mol. The modified conjugated diene-based polymer has a weight average molecular weight (Mw) of 100,000 g/mol to 4,000,000 g/mol, where the weight average molecular weight may be, more specifically, 300,000 g/mol to 1,500,000 g/mol.

When the weight average molecular weight (Mw) of the modified conjugated diene-based polymer is less than 100,000 g/mol or the number average molecular weight (Mn) of the modified conjugated diene-based polymer is less than 50,000 g/mol, the tensile properties when applied to the rubber composition may deteriorate. When the weight average molecular weight (Mw) exceeds 4,000,000 g/mol or the number average molecular weight (Mn) exceeds 2,000,000 g/mol, the workability of the rubber composition deteriorates due to the deterioration of the processability of the modified conjugated diene-based polymer, which may render kneading difficult and may render it difficult to sufficiently improve the physical properties of the rubber composition.

More specifically, when the modified conjugated diene-based polymer of one embodiment of the present disclosure simultaneously satisfies the conditions of weight average molecular weight (Mw) and number average molecular weight (Mn) as well as the molecular weight distribution, it is possible to improve the viscoelasticity and the processability of the rubber composition when applied to a composition made of rubber in a well-balanced manner.

The modified conjugated diene-based polymer may have a vinyl group content of 5 mass% or more, specifically 10 mass% or more, and more specifically 10 mass% to 60 mass% with respect to the total weight of the polymer. When the content of the vinyl group is in the above ranges, the glass transition temperature can be adjusted to an appropriate range, and the physical properties required for a tire, such as running resistance and braking force, can be improved when applied to a tire.

At this time, the content of the vinyl group is a content in percentage of the repeating unit of a structure derived from a 1,2-added conjugated diene-based monomer rather than a 1,4-added conjugated diene-based monomer, with respect to the total weight of the conjugated diene-based polymer including a monomer having a vinyl group or a conjugated diene-based monomer.

The modified conjugated diene-based polymer may have a Mooney viscosity (MV) at 100 °C of 40 to 140, specifically 60 to 100. When the Mooney viscosity is in the above ranges, better processability can be obtained.

In the present disclosure, the Mooney viscosity can be measured using a Mooney viscometer such as Monsanto's MV2000E at 100 °C at a rotor speed of 20.02 rpm and Large Rotor. A sample used in this case may be left at room temperature (23 ± 3 °C) for 30 minutes or longer, then 27 ± 3 g of the sample is collected to fill the inside of a die cavity, and the measurement is carried out by operating a platen.

Further, the present disclosure can provide a method of producing the modified conjugated diene-based polymer using a modifier containing a compound represented by the formula (1).

Specifically, the method of producing the modified conjugated diene-based polymer may include a step 1) where a conjugated diene-based monomer, or an aromatic vinyl-based monomer and a conjugated diene-based monomer are polymerized in a hydrocarbon solvent in the presence of an organic alkali metal compound to obtain an active polymer in which an alkali metal is bonded to at least one terminal, and a step 2) where the active polymer is reacted with a modifier containing a compound represented by the chemical formula (1).

The step 1) is a step for obtaining an active polymer in which an alkali metal is bonded to at least one terminal, which can be carried out by polymerizing a conjugated diene-based monomer, or an aromatic vinyl-based monomer and a conjugated diene-based monomer in a hydrocarbon solvent in the presence of an organic alkali metal compound.

The polymerization in the step 1) may use a conjugated diene-based monomer alone or use a conjugated diene-based monomer and an aromatic vinyl-based monomer together as a monomer. That is, the polymer obtained with the production method of one embodiment of the present disclosure may be a homopolymer of a conjugated diene-based monomer or a copolymer derived from a conjugated diene-based monomer and an aromatic vinyl-based monomer.

The conjugated diene-based monomer is not particularly limited, and it may be, for example, at least one selected from the group consisting of 1,3-butadiene, 2,3-dimethyl-1,3-butadiene, piperylene, 3-butyl-1,3-octadien, isoprene, and 2-phenyl-1,3-butadiene.

When a conjugated diene-based monomer and an aromatic vinyl-based monomer are used together as the monomer, the conjugated diene-based monomer is preferably contained as a unit derived from the conjugated diene-based monomer in an amount of 55 mass% or more, preferably 55 mass% to 90 mass%, in a finally obtained modified conjugated diene-based polymer.

The aromatic vinyl-based monomer is not particularly limited, and it may be, for example, at least one selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl) styrene, and 1-vinyl-5-hexylnaphthalene.

When a conjugated diene-based monomer and an aromatic vinyl-based monomer are used together as the monomer, the aromatic vinyl-based monomer may be used in an amount so that a unit derived from the aromatic vinyl-based monomer is contained in an amount of 45 mass% or less, specifically 10 mass% to 45 mass% in a finally obtained modified conjugated diene-based polymer.

The conjugated diene-based polymer to be modified with a modifier containing a compound represented by the formula (1) is preferably styrene butadiene rubber among copolymers using a conjugated diene-based monomer and an aromatic vinyl-based monomer as the monomer. This can more reliably realize excellent low heat generating properties without deteriorating other performance.

When styrene butadiene rubber is used as the conjugated diene-based polymer, the amount of styrene is preferably 45 mass% or less, more preferably 10 mass% to 45 mass%, and still more preferably 15 mass% to 45 mass%.

The hydrocarbon solvent is not particularly limited, and it may be, for example, at least one selected from the group consisting of n-pentane, n-hexane, n-heptane, isooctane, cyclohexane, toluene, benzene, and xylene.

The organic alkali metal compound may be used in an amount of 0.1 mmol to 1.0 mmol with respect to 100 g of the whole monomer.

The organic alkali metal compound is not particularly limited, and it may be, for example, at least one selected from the group consisting of methyllithium, ethyllithium, propyllithium, n-butyllithium, s-butyllithium, t-butyllithium, hexyllithium, n-decyllithium, t-octyllithium, phenyllithium, 1-naphthyllithium, n-eicosyllithium, 4-butylphenyllithium, 4-tolyllithium, cyclohexyllithium, 3,5-di-n-heptylcyclohexyllithium, 4-cyclopentyllithium, naphthyl sodium, naphthyl potassium, lithium alkoxide, sodium alkoxide, potassium alkoxide, lithium sulfonate, sodium sulfonate, potassium sulfonate, lithium amide, sodium amide, potassium amide, and lithium isopropylamide.

The polymerization in the step 1) may be carried out by further adding a polar additive, if necessary, where the polar additive can be added in an amount of 0.001 parts by weight to 1.0 part by weight with respect to 100 parts by weight of the whole monomer. Specifically, it can be added in an amount of 0.005 parts by weight to 0.5 parts by weight, and more specifically 0.01 parts by weight to 0.3 parts by weight, with respect to 100 parts by weight of the whole monomer.

The polar additive may be, for example, at least one selected from the group consisting of tetrahydrofuran, ditetrahydrofurylpropane, diethyl ether, cycloamal ether, dipropyl ether, ethylene dimethyl ether, ethylene dimethyl ether, diethyl glycol, dimethyl ether, tertiary butoxyethoxyethane, bis (3-dimethylaminoethyl) ether, (dimethylaminoethyl) ethyl ether, trimethylamine, triethylamine, tripropylamine, and tetramethylethylenediamine.

When a conjugated diene-based monomer and an aromatic vinyl-based monomer are copolymerized using the polar additive in the production method, the difference in reaction rates may be compensated so that the formation of random copolymer is induced to be easy.

The polymerization in the step 1) can be carried out via adiabatic polymerization or isothermal polymerization.

As used herein, the adiabatic polymerization is a polymerization method including a step of charging an organic alkali metal compound and then performing polymerization by self-reaction heat without arbitrarily applying heat, and the isothermal polymerization is a polymerization method in which the organic alkali metal compound is charged and then heat is arbitrarily applied or removed to maintain a constant temperature of the polymer.

The polymerization may be carried out in a temperature range of 20 °C to 200 °C, specifically in a temperature range of 0 °C to 150 °C, and more specifically in a temperature range of 10 °C to 120 °C.

The step 2) is a modification reaction step in which the active polymer is reacted with a modifier containing a compound represented by the formula (1) to produce a modified conjugated diene-based polymer.

At this time, the modifier containing a compound represented by the formula (1) may be the same as that described above. The compound represented by the formula (1) can be used at a ratio of 0.1 mol to 2.0 mol with respect to 1 mol of the organic alkali metal compound.

Further, the reaction in the step 2) is a modification reaction for introducing a functional group into the polymer, where each reaction may be carried out in a temperature range of 0 °C to 90 °C for 1 minute to 5 hours.

The above-mentioned production method may further include one or more steps of recovering solvent and unreacted monomers and drying after the step 2), if necessary.

The rubber component may contain a rubber component other than the conjugated diene-based polymer (hereinafter, may be referred to as "other rubber component").

The other rubber component can be appropriately selected according to the required performance. For example, it may be a natural rubber (NR) containing cis-1,4-polyisoprene; a modified natural rubber such as epoxidized natural rubber (ENR), deproteinized natural rubber (DPNR), and hydrogenated natural rubber obtained by modifying or purifying the above-mentioned common natural rubber; a synthetic rubber such as styrenebutadiene copolymer (SBR), polybutadiene (BR), polyisoprene (IR), butyl rubber (IIR), ethylene-propylene copolymer, polyisobutylene-co-isoprene, neoprene, poly (ethylene-co-propylene), poly (styrene-co-butadiene), poly (styrene-co-isoprene), poly (styrene-co-isoprene-co-butadiene), poly (isoprene-co-butadiene), poly (ethylene-co-propylene-co-diene), polysulfide rubber, acrylic rubber, urethane rubber, silicone rubber, epichlorohydrin rubber, butyl rubber, and halogenated butyl rubber; or a mixture of any one or more of the above.

The content of the conjugated diene-based polymer modified with a modifier containing a compound represented by the formula (1) in the rubber component is not particularly limited, and it may be 0.1 mass% to 100 mass%, preferably 10 mass% to 100 mass%, and more preferably 20 mass% to 90 mass%. When the content of the modified conjugated diene-based polymer is 0.1 mass% or more, the low heat generating properties can be improved while keeping other physical properties good. As a result, a formed product manufactured using the rubber composition such as a tire can more reliably obtain the effects such as fuel efficiency properties, wear properties and braking properties.

### (Filler)

The rubber composition of the present disclosure contains a filler in addition to the above-described rubber component.

By using a filler together with the rubber component containing the modified conjugated diene-based polymer, the dispersibility of the filler is enhanced, the performance such as strength, wear resistance, and wet grip properties is maintained at a high level, and excellent low heat generating properties can be realized at the same time.

The content of the filler is not particularly limited, but it is preferably 10 parts by mass to 160 parts by mass and more preferably 30 parts by mass to 120 parts by mass with respect to 100 parts by mass of the rubber component. This is because better low heat generating properties and wear resistance can be realized by optimizing the amount of the filler. When the content is 10 parts by mass or more, sufficient wear resistance can be obtained. When the content is 160 parts by mass or less, deterioration of low heat generating properties can be suppressed.

The type of the filler is not particularly limited. For example, carbon black, silica, and other inorganic fillers can be contained. Among the above, the filler preferably contains at least silica. This can further improve the low heat generating properties, the wear resistance, and the wet performance when used in a tire. It can also suppress deterioration of the processability of the composition.

Examples of the silica include wet silica (hydrous silicic acid), dry silica (anhydrous silicic acid), calcium silicate, and aluminum silicate, among which wet silica is preferable. These silicas may be used alone or in combination of two or more.

The wet silica may be precipitated silica. The precipitated silica is silica obtained by aggregating primary particles by, at an initial stage of production, advancing the reaction of a reaction solution in a relatively high temperature and neutral to alkaline pH range to grow silica primary particles and then controlling them to acidic pH range.

The content of the silica is not particularly limited, but it is preferably 10 parts by mass to 160 parts by mass and more preferably 30 parts by mass to 120 parts by mass with respect to 100 parts by mass of the rubber component. This is because better low heat generating properties and wear resistance can be realized by optimizing the amount of the filler.
When the content is 10 parts by mass or more, sufficient wear resistance can be obtained. When the content is 160 parts by mass or less, deterioration of low heat generating properties can be suppressed.

The filler preferably contains carbon black in addition to the silica. This can realize better reinforcing properties and wear resistance.

Examples of the carbon black include carbon black of GPF, FEF, SRF, HAF, ISAF, IISAF, and SAF grades.

The content of the carbon black is preferably 2 parts by mass or more and more preferably 4 parts by mass or more with respect to 100 parts by mass of the rubber component, from the viewpoint of obtaining better wear resistance. This is because the wear resistance of the rubber composition can be further improved by setting the content of the carbon black to 2 parts by mass or more with respect to 100 parts by mass of the rubber component. The content of the carbon black is preferably 90 parts by mass or less and more preferably 70 parts by mass or less with respect to 100 parts by mass of the rubber component. This is because, by setting the content of the carbon black to 160 parts by mass or less with respect to 100 parts by mass of the rubber component, it is possible to further improve the low heat generating properties and the processability while maintaining the wear resistance at a high level.

Examples of the other filler include an inorganic compound represented by the following formula (A).

nM·xSiO_{Y}·zH₂O (A)

(where M is at least one selected from metals selected from the group consisting of Al, Mg, Ti, Ca and Zr, oxides or hydroxides of these metals, hydrates of these, and carbonates of these metals; and n, x, y and z are an integer of 1 to 5, an integer of 0 to 10, an integer of 2 to 5, and an integer of 0 to 10, respectively.)

Examples of the inorganic compound of the formula (A) include alumina (Al₂O₃) such as γ-alumina and α-alumina; alumina monohydrate (Al₂O₃·H₂O) such as boehmite and diaspore; aluminum hydroxide [Al(OH)₃] such as gibbsite and bayerite; aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminum oxide magnesium (MgO·Al₂O₃), clay (Al₂O₃·2SiO₂), kaolin (Al₂O₃·2SiO₂·2H₂O), pyrophyllite (Al₂O₃.4SiO₂-H₂O), bentonite (Al₂O₃·4SiO₂·2H₂O), aluminum silicate (Al₂SiO₅, Al₄·3SiO₄-5H₂O, etc.), magnesium silicate (Mg₂SiO₄, MgSiO₃, etc.), calcium silicate (Ca₂SiO₄, etc.), aluminum calcium silicate (Al₂O₃·CaO·2SiO₂, etc.), calcium magnesium silicate (CaMgSiO₄), calcium carbonate (CaCO₃), zirconium oxide (ZrO₂), zirconium hydroxide [ZrO(OH)₂·nH₂O], zirconium carbonate [Zr(CO₃)₂], and crystalline aluminosilicate containing hydrogen, alkali metal or alkaline earth metal that corrects the charge like various zeolites.

### (Other components)

The rubber composition of the present disclosure may contain other components in addition to the above-described rubber component and filler if the effect of the present disclosure is not impaired.

Examples of the other component include silane coupling agent, thermoplastic resin, plasticizer, liquid rubber, age resistor, crosslinking accelerator, crosslinking agent, crosslinking promoting aid, antiozonant, and surfactant, and additives that are commonly used in the rubber industry can be appropriately contained.

When silica is contained as the filler, the dispersibility of the silica is enhanced and better low heat generating properties and reinforcing properties can be obtained by using the silane coupling agent together with the silica.

The silane coupling agent is not particularly limited. Examples thereof include bis (3-triethoxysilylpropyl) tetrasulfide, bis (3-triethoxysilylpropyl) trisulfide, bis (3-triethoxysilylpropyl) disulfide, bis (2-triethoxysilylethyl) tetrasulfide, bis (3-trimethoxysilylpropyl) tetrasulfide, bis (2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropyl methacrylate monosulfide, 3-trimethoxysilylpropyl methacrylate monosulfide, bis (3-diethoxymethylsilylpropyl) tetrasulfide, 3-mercaptopropyl dimethoxymethyl silane, dimethoxymethylsilylpropyl-N,N-dimethylthiocarbamoyl tetrasulfide, and dimethoxymethylsilylpropylbenzothiazolyl tetrasulfide. A mixture of any one or more of these can also be used.

From the viewpoint of improving the reinforcing properties of the rubber composition, it is preferable to contain bis (3-triethoxysilylpropyl) polysulfide or 3-trimethoxysilylpropylbenzothiazyl tetrasulfide as the silane coupling agent.

Because the rubber composition of the present disclosure uses a modified conjugated diene-based polymer where a functional group having a high affinity with a silica-based filler has been introduced into an active site as the rubber component, the blending amount of the silane coupling agent can be reduced as compared with common cases. For example, the content of the silane coupling agent may be 1 part by mass to 20 parts by mass with respect to 100 parts by mass of the silica. When used in the above range, it is possible to sufficiently exhibit the effect as a coupling agent and prevent gelation of the rubber component at the same time. From the same viewpoint, the content of the silane coupling agent may be 5 parts by mass to 15 parts by mass with respect to 100 parts by mass of the silica.

The rubber composition of the present disclosure may further contain a thermoplastic resin. By containing the thermoplastic resin, the processability of the rubber composition can be improved, and additionally, it is possible to improve the braking performance on dry road surfaces and wet road surfaces when the rubber composition is used for a tire.

The type of the thermoplastic resin is not particularly limited. Examples thereof include C5-based resin, C9-based resin, C5 to C9-based resin, dicyclopentadiene-based resin, rosin-based resin, alkyl phenol-based resin, and terpene phenol-based resin.

The C5-based resin refers to a C5-based synthetic petroleum resin and refers to a solid polymer obtained by polymerizing a C5 fraction using a Friedel-Crafts catalyst such as AlCl₃ or BF₃. Specific examples thereof include a copolymer containing isoprene, cyclopentadiene, 1,3-pentadiene, 1-pentene and the like as main components, a copolymer of 2-pentene and dicyclopentadiene, and a polymer mainly composed of 1,3-pentadiene.

The C9-based resin refers to a C9-based synthetic petroleum resin and refers to a solid polymer obtained by polymerizing a C9 fraction using a Friedel-Crafts catalyst such as AlCl₃ or BF₃. Specific examples thereof include a copolymer containing indene, methylindene, α-methylstyrene, vinyltoluene and the like as main components.

The C5 to C9-based resin refers to a C5 to C9-based synthetic petroleum resin and refers to a solid polymer obtained by polymerizing a C5 to C9 fraction using a Friedel-Crafts catalyst such as AlCl₃ or BF₃. Examples thereof include a copolymer containing styrene, vinyltoluene, α-methylstyrene, indene and the like as main components. In the present disclosure, the C5 to C9-based resin is preferably a resin having a small amount of C9 or more components from the viewpoint of the compatibility with the rubber component. As used herein, the "small amount of C9 or more components" means that the C9 or more components in the total amount of the resin are less than 50 mass% and preferably 40 mass% or less.

The dicyclopentadiene-based resin is a petroleum resin using dicyclopentadiene in the above-mentioned C5 fraction as a main raw material. Examples thereof include products of "MARUKAREZ M" Series (M-890A, M-845A, M-990A, etc.) of Maruzen Petrochemical Co., Ltd.

The rosin-based resin may be a natural resin rosin such as gum rosin contained in crude turpentine and tall oil, tall oil rosin, and wood rosin, and it may be modified rosin, rosin derivative, or modified rosin derivative such as polymerized rosin, and partially hydrogenated rosin thereof; glycerin ester rosin, and partially hydrogenated rosin and fully hydrogenated rosin thereof; and pentaerythritol ester rosin, and partially hydrogenated rosin and polymerized rosin thereof.

The alkyl phenol-based resin is a phenol-based resin having an alkyl group. Examples thereof include an alkyl phenol-acetylene resin such as p-tert-butylphenol-acetylene resin, and an alkyl phenol-formaldehyde resin having a low degree of polymerization.

The terpene phenol-based resin is a resin that can be obtained by reacting terpenes with various phenols using a Friedel-Crafts catalyst, or by further performing condensation with formalin. The terpenes as a raw material are not particularly limited, but they are preferably monoterpene hydrocarbons such as α-pinene and limonene, more preferably those containing α-pinene, and particularly preferably α-pinene. A terpene phenol-based resin having a large proportion of phenol components is suitable for the present disclosure. These resins may be used alone or in combination of two or more.

Further, a novolak-type phenol resin is preferably contained as the phenol resin. By containing the novolak-type phenol resin, the elastic modulus in the rubber composition can be increased and the steering stability can be improved without using a curing agent and without deteriorating the wet performance.

The content of the thermoplastic resin is not particularly limited. However, from the viewpoint of improving the processability and the braking properties when applied to a tire without deteriorating the wear resistance and the reinforcing properties, it is preferably 3 parts by mass to 50 parts by mass and more preferably 5 parts by mass to 30 parts by mass with respect to 100 parts by mass of the rubber component.

The age resistor may be a known one, which is not particularly limited. Examples thereof include a phenol-based age resistor, an imidazole-based age resistor, and an amine-based age resistor. These age resistors may be used alone or in combination of two or more.

The crosslinking accelerator may be a known one, which is not particularly limited. Examples thereof include a thiazole-based vulcanization accelerator such as 2-mercaptobenzothiazole, dibenzothiazyl disulfide; a sulfenamide-based vulcanization accelerator such as N-cyclohexyl-2-benzothiazyl sulfenamide and N-t-butyl-2-benzothiazyl sulfenamide; a guanidine-based vulcanization accelerator such as diphenyl guanidine; a thiuram-based vulcanization accelerator such as tetramethyl thiuram disulfide, tetraethyl thiuram disulfide, tetrabutyl thiuram disulfide, tetradodecyl thiuram disulfide, tetraoctyl thiuram disulfide, tetrabenzyl thiuram disulfide, and dipentamethylene thiuram tetrasulfide; a dithiocarbamate-based vulcanization accelerator such as zinc dimethyldithiocarbamate; and zinc dialkyldithiophosphate. These crosslinking accelerators may be used alone or in combination of two or more.

The crosslinking agent is not particularly limited, either. Examples thereof include sulfur and a bismaleimide compound. These crosslinking agents may be used alone or in combination of two or more.

Examples of the types of the bismaleimide compound include N,N'-o-phenylene bismaleimide, N,N'-m-phenylene bismaleimide, N,N'-p-phenylene bismaleimide, N,N'-(4,4'-diphenylmethane) bismaleimide, 2,2-bis-[4-(4-maleimidephenoxy)phenyl] propane, and bis(3-ether-5-methyl-4-maleimidephenyl) methane. In the present disclosure, N,N'-m-phenylene bismaleimide, N,N'-(4,4'-diphenylmethane) bismaleimide and the like may be suitably used.

Examples of the crosslinking promoting aid include zinc oxide (ZnO) and a fatty acid. The fatty acid may be a saturated or unsaturated, linear or branched fatty acid. The carbon number of the fatty acid is not particularly limited, and it may be a fatty acid with 1 to 30, preferably 15 to 30 carbon atoms, for example. Specific examples thereof include naphthenic acids such as cyclohexanoic acid (cyclohexanecarboxylic acid) and alkylcyclopentane with side chains; saturated fatty acids such as hexanoic acid, octanoic acid, decanoic acid (including branched carboxylic acids such as neodecanoic acid), dodecanoic acid, tetradecanoic acid, hexadecanoic acid, and octadecanoic acid (stearic acid); unsaturated fatty acids such as methacrylic acid, oleic acid, linoleic acid, and linolenic acid; resin acids such as rosin, tall oil acid, and abietic acid. These may be used alone or in combination of two or more. In the present disclosure, zinc oxide or stearic acid may be suitably used.

A method of producing the rubber composition of the present disclosure is not particularly limited, and the rubber composition can be obtained by blending and kneading all the components (rubber component, filler, and other components) of the rubber composition.

### <Tire>

A tire of the present disclosure uses the rubber composition of the present disclosure described above. By using the rubber composition of the present disclosure as a tire material, the obtained tire can obtain greatly improved rolling resistance without deteriorating other performance.

In the tire of the present disclosure, the above-described rubber composition is specifically applied to a member, and it is particularly preferable to apply the rubber composition to a tread among such tire members. A tire using the rubber composition in a tread can realize a high level of reinforcing properties (and thus wear resistance, steering stability, etc.) in addition to an effect of reducing rolling resistance. Examples of a gas to be filled in the tire of the present disclosure include normal air, air with different oxygen partial pressure, and an inert gas such as nitrogen.

### EXAMPLES

The following describes the present disclosure in more detail with reference to examples, but the present disclosure is not limited to the following examples.

### <Example 1>

Continuous reactors in which three reactors were connected in series were prepared, where in the first reactor, a styrene solution in which styrene was dissolved in n-hexane at 60 mass% was injected at a rate of 1.80 kg/h, a 1,3-butadiene solution in which 1,3-butadiene was dissolved in n-hexane at 60 mass% was injected at a rate of 14.2 kg/h, n-hexane was injected at a rate of 49.11 kg/h, a 1,2-butadiene solution in which 1,2-butadiene was dissolved in n-hexane at 2.0 mass% was injected at a rate of 40 g/h, a solution in which 2,2-(di-2(tetrahydrofuryl) propane was dissolved in n-hexane at 10 mass% was injected as a polar additive at a rate of 51.0 g/h, and a n-butyllithium solution in which n-butyllithium was dissolved in n-hexane at 10 mass% was injected at a rate of 59.0 g/h. At this time, the temperature of the first reactor was maintained at 50 °C.

Next, a 1,3-butadiene solution in which 1,3-butadiene was dissolved in n-hexane at 60 mass% was injected into the second reactor at a rate of 0.74 kg/h. At this time, the temperature of the second reactor was maintained at 65 °C.

The polymer was transferred to the third reactor by the second reactor, and a solution in which a compound (1a) as a modifier was dissolved at 10 mass% was charged into the third reactor at a rate of 61.4 g/h. After that, the temperature of the third reactor was maintained at 65 °C.

Next, an IR1520 (BASF) solution dissolved at 30 mass% was injected as an antioxidant into the polymerization solution discharged from the third reactor at a rate of 167 g/h and stirred. As a result, the obtained polymer was put into warm water heated with steam and stirred to remove the solvent, thereby producing a modified conjugated diene-based polymer.

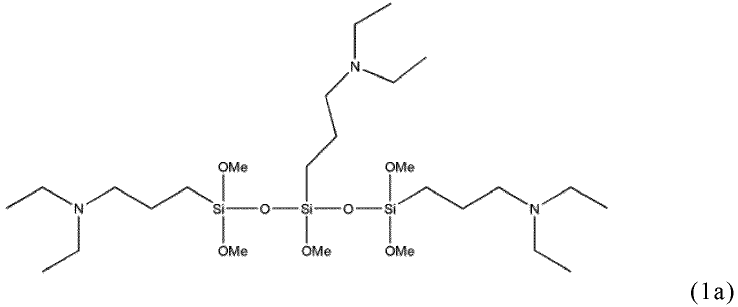

### <Example 2>

A modified conjugated diene-based polymer was produced in the same manner as in Example 1 except that a compound of the following chemical formula (1b) as a 10.0 mass% n-hexane solution was injected at a rate of 78.1 g/h instead of the compound of the chemical formula (1a) as a modifier in Example 1.

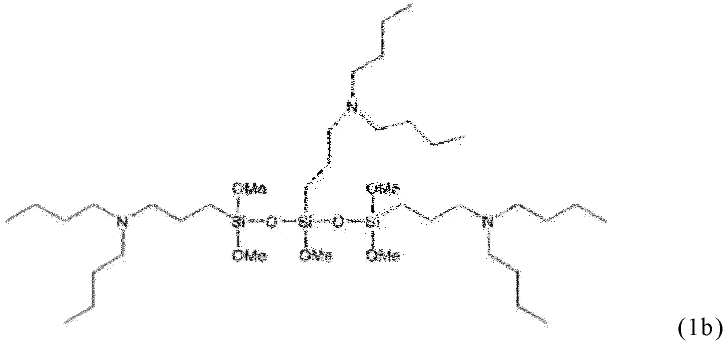

### <Example 3>

A modified conjugated diene-based polymer was produced in the same manner as in Example 1 except that a compound of the following chemical formula (1c) as a 10.0 mass% n-hexane solution was injected at a rate of 80.3 g/h instead of the compound of the chemical formula (1a) as a modifier in Example 1.

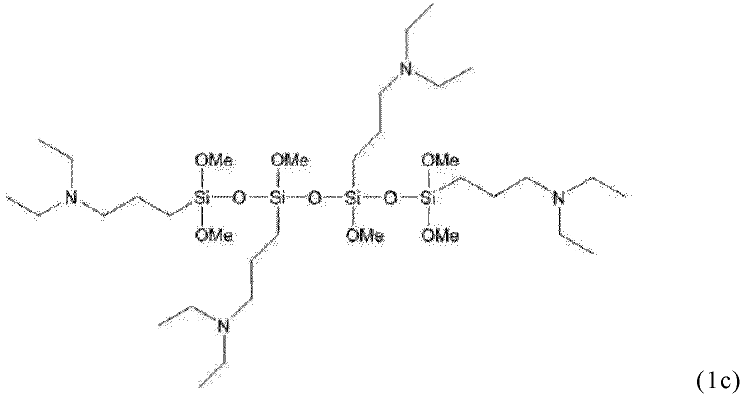

### <Example 4>

A modified conjugated diene-based polymer was produced in the same manner as in Example 1 except that a compound of the following chemical formula (1d) as a 10.0 mass% n-hexane solution was injected at a rate of 99.3 g/h instead of the compound of the chemical formula (1a) as a modifier in Example 1.

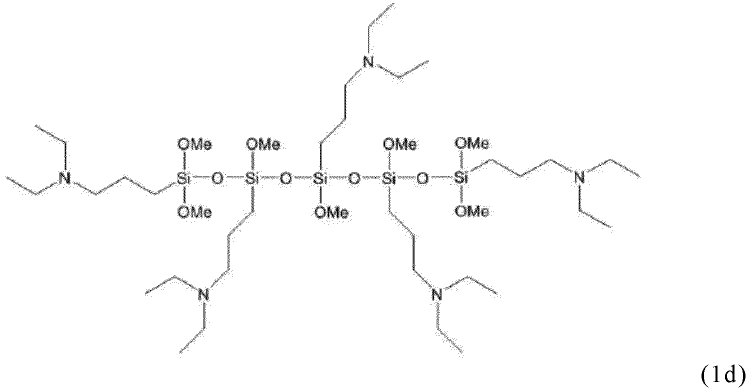

### <Example 5>

A modified conjugated diene-based polymer was produced in the same manner as in Example 1 except that a compound of the following chemical formula (1e) as a 10.0 mass% n-hexane solution was injected at a rate of 68.4 g/h instead of the compound of the chemical formula (1a) as a modifier in Example 1.

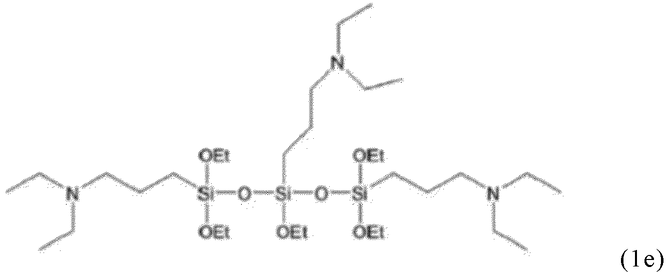

### <Comparative Example 1>

An unmodified conjugated diene-based polymer was produced in the same manner as in Example 1 except that the modification reaction using a modifier in Example 1 was not performed.

### <Comparative Example 2>

A modified conjugated diene-based polymer was produced in the same manner as in Example 1 except that a compound of the following chemical formula (2a) as a 10.0 mass% n-hexane solution was injected at a rate of 23.5 g/h instead of the compound of the chemical formula (1a) as a modifier in Example 1.

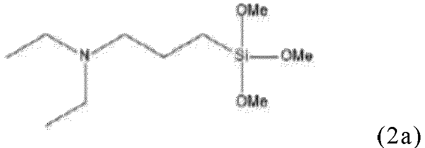

### <Comparative Example 3>

A modified conjugated diene-based polymer was produced in the same manner as in Example 1 except that a compound of the following chemical formula (2b) as a 10.0 mass% n-hexane solution was injected at a rate of 42.5 g/h instead of the compound of the chemical formula (1a) as a modifier in Example 1.

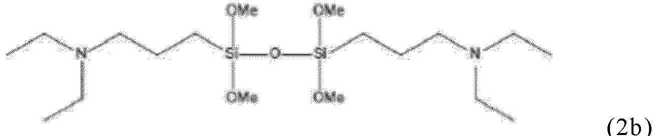

### <Comparative Example 4>

A modified conjugated diene-based polymer was produced in the same manner as in Example 1 except that a compound of the following chemical formula (2c) as a 10.0 mass% n-hexane solution was injected at a rate of 74.6 g/h instead of the compound of the chemical formula (1a) as a modifier in Example 1.

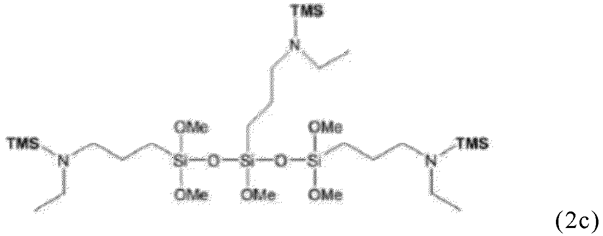

### <Comparative Example 5>

A modified conjugated diene-based polymer was produced in the same manner as in Example 1 except that a compound of the following chemical formula (2d) as a 10.0 mass% n-hexane solution was injected at a rate of 88.0 g/h instead of the compound of the chemical formula (1a) as a modifier in Example 1.

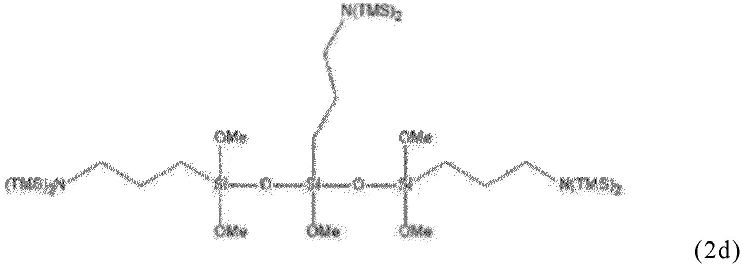

### (Evaluation 1)

The weight average molecular weight (Mw), number average molecular weight (Mn), molecular weight distribution (or polydispersity index (PDI)), component analysis, and Mooney viscosity (MV) were measured respectively for each of the modified conjugated diene-based polymers produced in Examples 1 to 5 and Comparative Examples 1 to 5. The results are listed in Table 1 below.

### (1) Analysis of component

The contents of styrene-derived unit (SM) and vinyl in each copolymer were measured using NMR.

### (2) Analysis of molecular weight

The weight average molecular weight (Mw) and number average molecular weight (Mn) of each copolymer were measured by GPC (gel permeation chromatograph) analysis under the condition of 40 °C. At this time, the column used was a combination of two PLgel Olexis columns and one PLgel mixed-C column of Polymer Laboratories, and all newly replaced columns were columns of mixed bed type. Further, PS (polystyrene) was used as the GPC standard material when calculating the molecular weight. The polydispersity index (PDI) was calculated by a ratio (Mw/Mn) of the weight average molecular weight to the number average molecular weight measured with the above method.

### (3) Analysis of Mooney viscosity

The Mooney viscosity of each copolymer was measured at 100 °C for 4 minutes after preheating two samples with a mass of 15 g or more for 1 minute using MV-2000 (Alpha Technologies).

**Table 1**

| Classification | | Example 1 | Example 2 | Comparative Example 1 | Comparative Example 2 | Comparative Example 3 | Comparative Example 4 | Comparative Example 5 |
|---|---|---|---|---|---|---|---|---|
| Modifier | | 1a | 1b | - | 2a | 2b | 2c | 2d |
| Mooney viscosity (MV) | | 54 | 55 | 50 | 57 | 54 | 55 | 57 |
| NMR | Styrene content (weight% based on total weight of polymer) | 10 | 10 | 10 | 10 | 10 | 10 | 10 |
| | Vinyl content (weight% based on total weight of polymer) | 38 | 38 | 38 | 38 | 38 | 38 | 38 |
| GPC | Mn (×10⁴g/mol) | 312 | 308 | 310 | 310 | 317 | 290 | 320 |
| | Mw (×10⁴g/mol) | 484 | 484 | 459 | 490 | 482 | 447 | 493 |
| | PDI (Mw/Mn) | 1.55 | 1.57 | 1.48 | 1.58 | 1.52 | 1.60 | 1.54 |

### (Evaluation 2)

The tensile properties and viscoelastic properties were measured to compare and analyze the physical properties of rubber compositions containing the modified conjugated diene-based polymers of Examples 1 and 2 and Comparative Examples 1 to 5, respectively, and the physical properties of formed products produced with these rubber compositions.

### (1) Production of rubber composition

Each rubber composition was produced through processes of first-stage kneading, second-stage kneading and third-stage kneading. At this time, the amount of the substance used excluding the modified conjugated diene-based polymer is listed based on 100 parts by mass of the modified conjugated diene-based polymer.

The first-stage kneading used a Banbury mixer equipped with a temperature control device, where 100 parts by mass of each of the copolymers, 70 parts by mass of silica, 11.02 parts by mass of bis (3-triethoxysilylpropyl) tetrasulfide as a silane coupling agent, 33.75 parts by mass of process oil (TDAE), 2.0 parts by mass of age resistor (TMDQ), 2.0 parts by mass of antioxidant, 3.0 parts by mass of zinc oxide (ZnO), 2.0 parts by mass of stearic acid, and 1.0 part by mass of wax were blended and kneaded at 80 rpm. At this time, the temperature of the kneader was controlled to obtain a primary compound at a discharging temperature of 140 °C to 150 °C.

In the second-stage kneading, after cooling the primary compound to room temperature, 1.75 parts by mass of rubber accelerator (CZ), 1.5 parts by mass of sulfur powder, and 2.0 parts by mass of vulcanization accelerator were added to the kneader, and mixing was performed at a temperature of 60 °C or lower to obtain a secondary compound.

After that, the secondary compound was formed by the third-stage kneading and vulcanized by vulcanization press at 180 °C for t90 + 10 minutes to produce each vulcanized rubber.

### (2) Tensile properties

The tensile properties were measured by preparing each test piece (thickness 25 mm, length 80 mm) according to the tensile test method of ASTM 412 and measuring the tensile strength at the time of cutting and the tensile stress at 300 % elongation (300 % modulus) of the test piece. Specifically, the tensile properties were measured at a speed of 50 cm/min at room temperature using a Universal Test Machin 4204 (Instron) tensile tester to obtain the tensile strength and the tensile stress value at 300 % elongation (300 % modulus). Each physical property value is listed in Table 2 with the numerical value of Comparative Example 3 being 100 and served as a reference, and the higher the numerical value is, the better.

### (3) Viscoelastic properties

The viscoelastic properties were obtained by using a dynamic mechanical analyzer (TA) to change the deformation at a frequency of 10 Hz and at each measurement temperature (0 °C to 60 °C) in a twist mode to measure tan δ. The lower the tan δ at a high temperature of 60 °C is, the smaller the hysteresis loss is, and the better the low rolling resistance (fuel efficiency) is. Each physical property value is listed in Table 2 with the numerical value of Comparative Example 3 being 100 and served as a reference, and the higher the numerical value is, the better.

### (4) Processability properties

The Mooney viscosity (MV, (ML 1 + 4, @ 100 °C) MU) of the secondary compound obtained during the (1) production of rubber test piece was measured to compare and analyze the processability properties of each polymer. The lower the measured value of Mooney viscosity is, the better the processability properties are.

Specifically, the Mooney viscosity was measured using a MV-2000 (ALPHA Technologies) at 100 °C at a rotor speed of 2 ± 0.02 rpm and Large Rotor. Each secondary compound was left at room temperature (23 ± 3 °C) for 30 minutes or longer, then 27 ± 3 g of the sample was collected to fill the inside of a die cavity, and the measurement was carried out by operating a platen for 4 minutes.

**Table 2**

| Classification | Example 1 | Example 2 | Comparative Example 1 | Comparative Example 2 | Comparative Example 3 | Comparative Example 4 | Comparative Example 5 |
|---|---|---|---|---|---|---|---|
| Tensile strength (Index) | 103 | 101 | 95 | 99 | 100 | 100 | 97 |
| 300% modulus (Index) | 105 | 101 | 94 | 96 | 100 | 99 | 98 |
| tan δ @0°C (Index) | 101 | 102 | 90 | 101 | 100 | 102 | 99 |
| tan δ @60°C (Index) | 111 | 115 | 81 | 91 | 100 | 112 | 109 |
| Processability properties (Mooney viscosity, MV) | 56 | 53 | 67 | 53 | 55 | 75 | 81 |

From the results in Table 2, it is understood that the rubber composition containing the modified conjugated diene-based polymer of Examples 1 and 2 modified with the modifier of the present disclosure has excellent viscoelasticity as compared with Comparative Examples 1 to 3. This is considered as an effect obtained by applying oligomer as the modifier in Examples 1 to 5. Further, it can be seen that, although the viscoelasticity is similar to that of Comparative Examples 4 and 5 in which a primary or secondary amino group is introduced, the processability is improved.

### INDUSTRIAL APPLICABILITY

According to the present disclosure, it is possible to provide a rubber composition that can realize excellent low heat generating properties without deteriorating other performance. Further, according to the present disclosure, it is possible to provide a tire with greatly improved rolling resistance.

## Claims

1. A rubber composition, comprising a rubber component and a filler, wherein
the rubber component contains a conjugated diene-based polymer modified with a modifier containing a compound represented by the formula 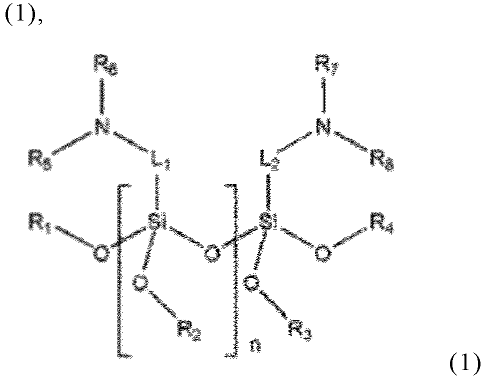 where R1 to R8 are each an independent alkyl group having 1 to 20 carbon atoms; L1 and L2 are each an independent alkylene group having 1 to 20 carbon atoms; and n is an integer of 2 to 4.

2. The rubber composition according to claim 1, wherein a conjugated diene-based polymer of the modified conjugated diene-based polymer is styrene butadiene rubber.

3. The rubber composition according to claim 2, wherein an amount of styrene in the modified styrene butadiene rubber is 10 mass% to 45 mass%.

4. The rubber composition according to any one of claims 1 to 3, wherein the modifier is any one of the formulas (1a) to (1e).

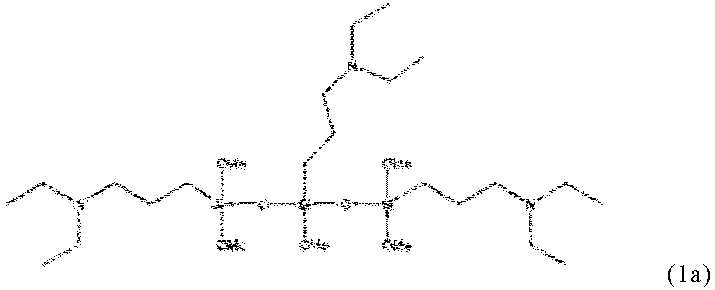

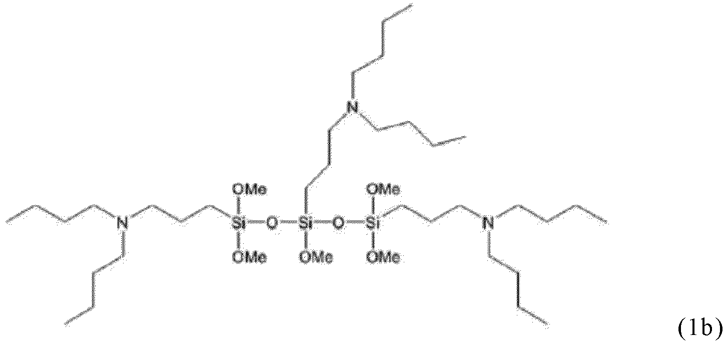

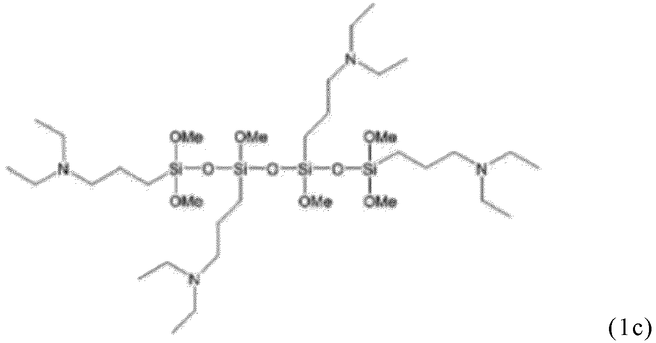

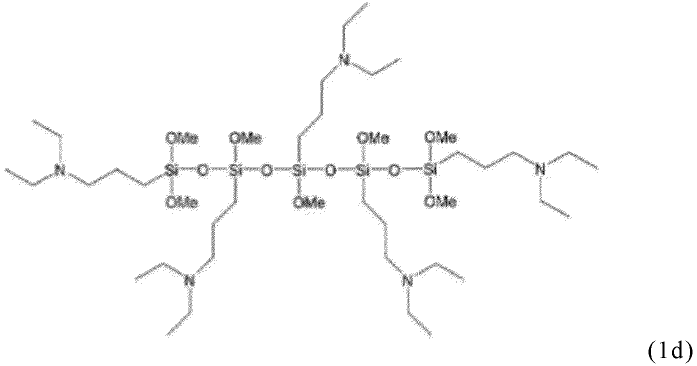

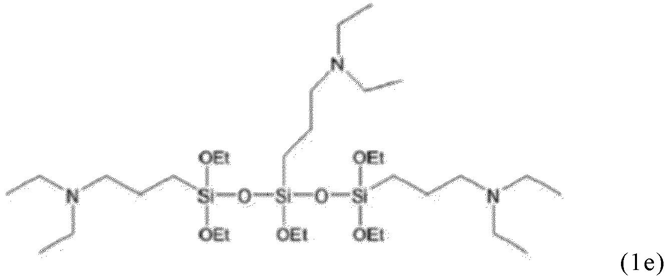

5. The rubber composition according to any one of claims 1 to 4, wherein the filler contains at least silica.

6. A tire, using the rubber composition according to any one of claims 1 to 5.

## Patentansprüche

1. Kautschukzusammensetzung, umfassend eine Kautschukkomponente und einen Füllstoff, wobei
die Kautschukkomponente ein Polymer auf Basis eines konjugierten Diens enthält, das mit einem Modifizierungsmittel modifiziert ist, das eine durch die Formel (1) dargestellte Verbindung enthält, 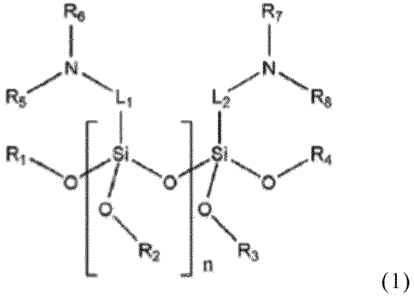
wobei R1 bis R8 jeweils eine unabhängige Alkylgruppe mit 1 bis 20 Kohlenstoffatomen sind; L1 und L2 jeweils eine unabhängige Alkylengruppe mit 1 bis 20 Kohlenstoffatomen sind; und n eine Ganzzahl von 2 bis 4 ist.

2. Kautschukzusammensetzung nach Anspruch 1, wobei ein Polymer auf Basis eines konjugierten Diens des modifizierten Polymers auf Basis eines konjugierten Diens Styrol-Butadien-Kautschuk ist.

3. Kautschukzusammensetzung nach Anspruch 2, wobei eine Menge an Styrol in dem modifizierten Styrol-Butadien-Kautschuk 10 Massenprozente bis 45 Massenprozente beträgt.

4. Kautschukzusammensetzung nach einem der Ansprüche 1 bis 3, wobei das Modifizierungsmittel eine der Formeln (1a) bis (1e) ist.

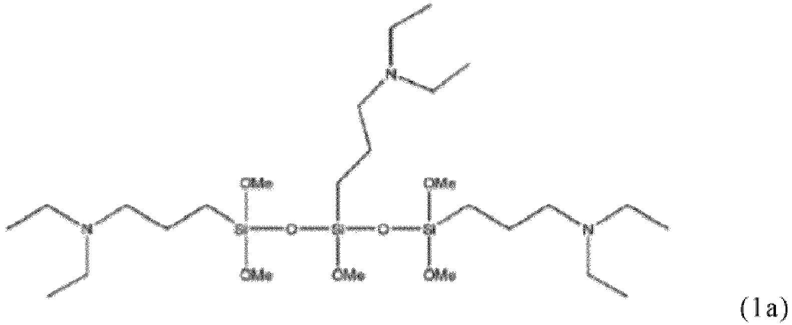

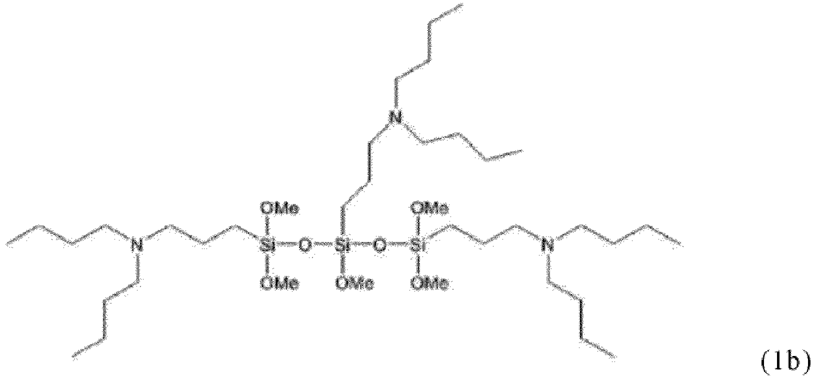

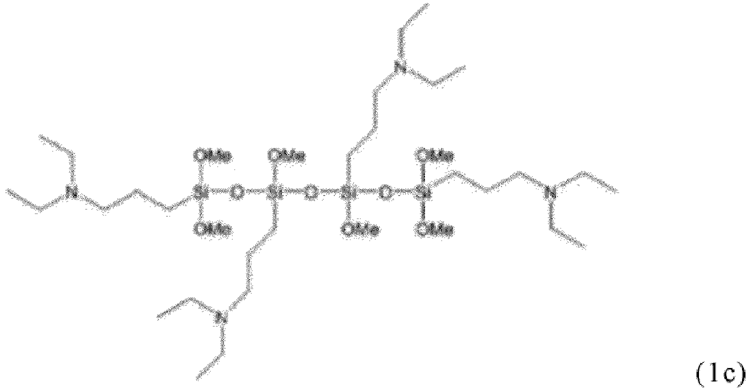

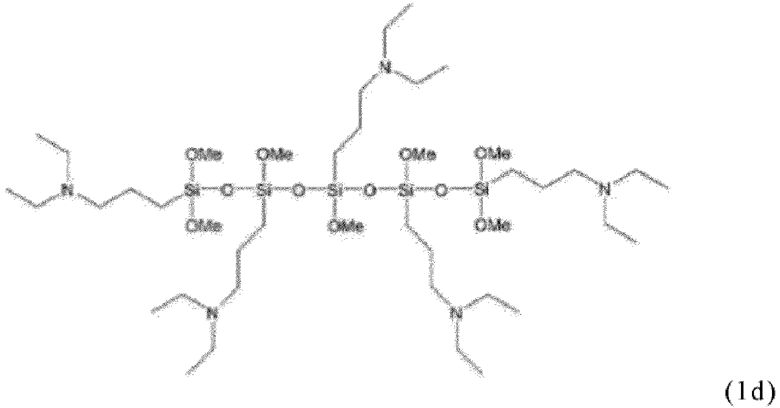

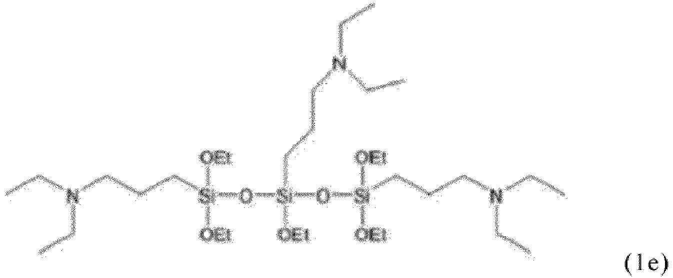

5. Kautschukzusammensetzung nach einem der Ansprüche 1 bis 4, wobei der Füllstoff mindestens Kieselsäure enthält.

6. Reifen, verwendend die Kautschukzusammensetzung nach einem der Ansprüche 1 bis 5.

## Revendications

1. Composition de caoutchouc, comprenant un composant de caoutchouc et une charge, dans laquelle :
le composant de caoutchouc contient un polymère à base de diène conjugué, modifié par un modificateur contenant un composé représenté par la formule (1), 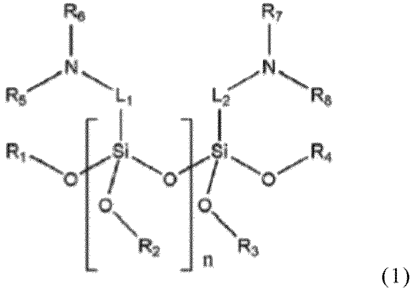
dans laquelle R1 à R8 sont chacun un groupe alkyle indépendant présentant 1 à 20 atomes de carbone ; L1 et L2 sont chacun un groupe alcylène indépendant présentant 1 à 20 atomes de carbone ; et n est un nombre entier de 2 à 4.

2. Composition de caoutchouc selon la revendication 1, dans laquelle un polymère à base de diène conjugué du polymère à base de diène conjugué modifié est un caoutchouc styrène-butadiène.

3. Composition de caoutchouc selon la revendication 2, dans laquelle une quantité de styrène dans le caoutchouc styrène-butadiène modifié est de 10 % en masse à 45 % en masse.

4. Composition de caoutchouc selon l'une quelconque des revendications 1 à 3, dans laquelle le modificateur est l'une quelconque des formules (1a) à (1e).

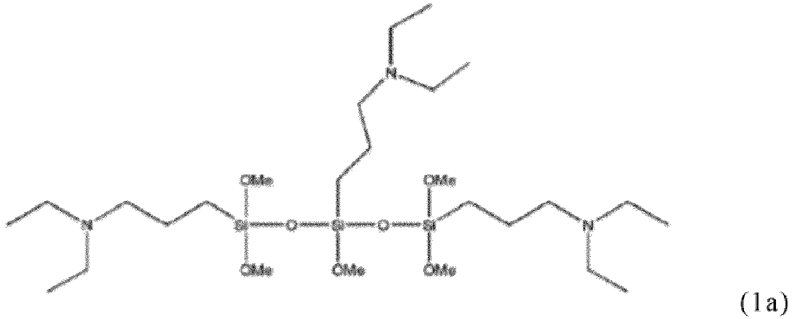

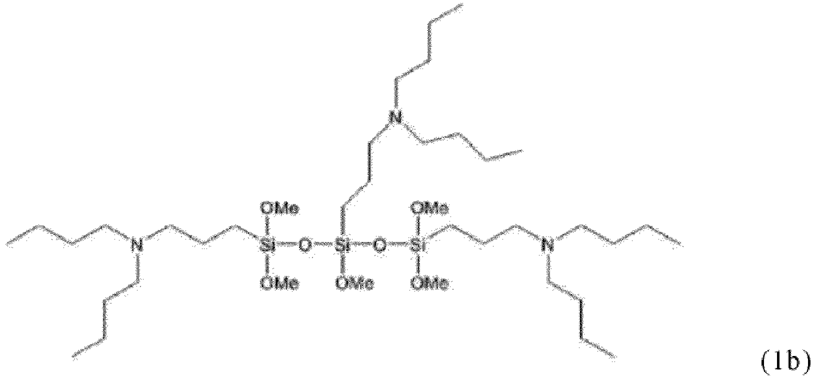

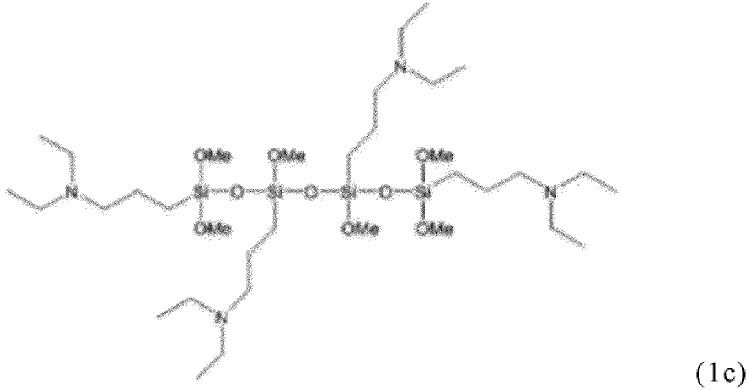

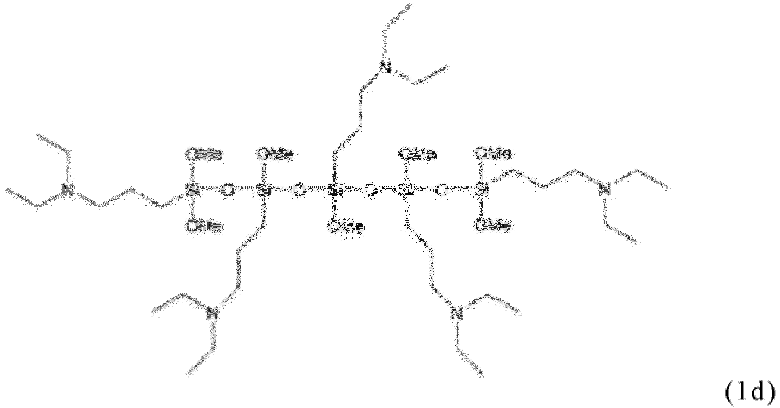

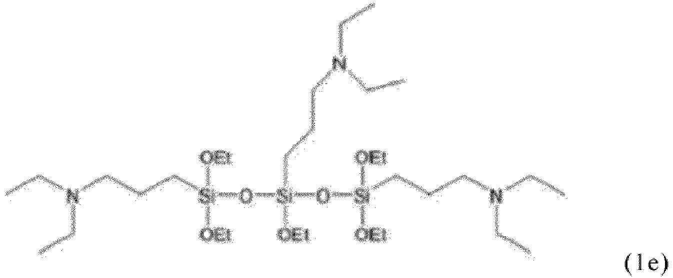

5. Composition de caoutchouc selon l'une quelconque des revendications 1 à 4, dans laquelle la charge contient au moins de la silice.

6. Pneu, utilisant la composition de caoutchouc selon l'une quelconque des revendications 1 à 5.
